# EUROPÄISCHE PATENTSCHRIFT

(11) **EP 1 119 243 B1**
(45) Veröffentlichungstag und Bekanntmachung des Hinweises auf die Patenterteilung: **07.05.2003**
(21) Anmeldenummer: 99907433.9
(22) Anmeldetag: 27.01.1999
(51) Int. Cl.: A01M 29/00

(54) **VORRICHTUNG ZUM VERTREIBEN VON VÖGELN**
DEVICE FOR SCARING AWAY BIRDS
DISPOSITIF POUR ELOIGNER LES OISEAUX

(30) Priorität: 10.10.1998 DE 29818126 U
(43) Veröffentlichungstag der Anmeldung: 01.08.2001
(73) Patentinhaber: Pollmann, Walter, 35745 Herborn-Hörbach (DE)
(72) Erfinder: Pollmann, Walter, 35745 Herborn-Hörbach (DE)
(74) Vertreter: Missling, Arne, Dipl.-Ing.
(86) Internationale Anmeldenummer: EP9900523
(87) Internationale Veröffentlichungsnummer: WO00021363

(56) Entgegenhaltungen:
- WO-A-93/20689
- DE-U- 9 111 261

## Beschreibung

Die Erfindung betrifft eine Vorrichtung zum Vertreiben von Vögeln, insbesondere von Tauben, zum Schutz von Gebäuden oder Gebäudeteilen wie Mauer- oder Fenstersimsen, von Fahr- und Freileitungsdrähten oder ähnlichen, für Vögel geeigneten und zumindest zeitweilig als Aufenthalt dienenden, potentielle Landeplätze bildenden Flächen, mit einem bandartigen, flachen, vorzugsweise flexiblen Kabelband aus Isolierstoff, welches in einem Kunststoff-Korpus an einer im Wesentlichen nach oben weisenden und für die Landung von Vögeln geeigneten potentiellen Landefläche zwei parallel und mit Abstand voneinander verlaufende, gegeneinander isolierte und zumindest teilweise blanke, unter Spannung setzbare elektrische Leitungsdrähte aufweist, wobei deren Abstand so gewählt ist, dass die Füße auflandender Vögel eine stromleitende Brücke zwischen den Leitungsdrähten ausbilden, der Kunststoff-Korpus zwischen den Leitungsdrähten Durchbrechungen aufweist, deren Flächennormalen quer zu dem Kabelband gerichtet sind und deren geometrische Form und/oder Anordnung so ausgebildet sind, dass sie einen raschen, rückstandslosen oder -armen Durchsatz der auf die Landefläche aufschlagenden Niederschläge durch das Kabelband gewährleisten.

Eine Vorrichtung dieser Art ist aus der WO 93 20 689 bekannt. Aus dem Gebrauchsmuster DE-U 91 11 261.3 ist eine Vorrichtung zur Abwehr von Vögeln, insbesondere von Tauben, von zu schützenden Gebäuden und Gebäudeteilen, insbesondere von solchen schmalen Flächen, wie Mauer- und Fenstergesimsen, unter Verwendung eines elektrischen Stromkreises bekannt, bei der die Vorrichtung ein flaches, vorzugsweise flexibles Kabelband ist, das zwei auf der einen Seite des Kabelbandes in ganzer Länge teilweise freiliegende, sonst aber in einem Kunststoff elektrisch isolierend eingebettete, parallel verlaufende elektrische Leitungsdrähte aufweist, die an dem einen Ende des Kabelbandes an eine elektrische Spannungsquelle anschließbar und deren andere Enden mittels eines stromleitenden Verbindungsstückes elektrisch leitend miteinander verbunden sind. Das dort vorgeschlagene Kabelband mit nach oben blanken, unter elektrische Spannung setzbaren Leitungsdrähten verbindet wirksam den Schutz der von den Vögeln angeflogenen Bauwerke mit einer unauffälligen Anbringung. Die relativ schmal und mit geringer Wanddicke ausführbaren Kabelbänder können an Gesimsen und Sohlbänken ohne Weiteres so angebracht werden, dass sie an einer Hausfassade in der Regel nicht wahrgenommen werden können. Im Gegensatz zur Verwendung von Abwehrdrähten, Netzen oder dergleichen mechanischen Schutzeinrichtungen werden von diesen Kabelbändern architektonische Strukturen, schmückende Fassadenelemente und dergleichen nicht Uberdeckt, so dass sie besonders fUr die Verwendung an denkmalswerten Gebäuden vorteilhaft sind. Der Aufwand an elektrischer Energie ist gering und fällt gegenüber dem Nachteil ins Auge fallender Vorrichtungen nicht ins Gewicht.

Bei starken Niederschlägen kann das aufschlagende Regenwasser, Schnee, Graupeln oder Tau zwischen den Leitungsdrähten stromleitende Brücken ausbilden, die zumindest zeitweise einen Strom durch die Leitungsdrähte selbst dann fließen lassen, wenn keine auflandenden Vögel abgewehrt werden müssten; der auf diese Weise erhöhte Verbrauch an elektrischer Energie mindert die Wirtschaftlichkeit der Vorrichtung. Dies soll durch die Durchbrüche vermieden werden.

Nachteilig bei dieser bekannten Vorrichtung ist jedoch, dass die Vögel die Vorrichtung auch überschreiten können, wobei nur immer ein Leitungsdraht gleichzeitig mit dem Fuß in Kontakt kommt, so dass keine abschreckende Wirkung erzielt wird.

Die Erfindung hat sich deshalb die Aufgabe gestellt, bei einer Vorrichtung der eingangs beschriebenen Art zum Einen die Ausbildung derartiger ungewollter stromleitender Brücken auszuschließen und zum Anderen diese so auszugestalten, dass vom Vogel immer zwei Leitungsdrähte gleichzeitig erfasst werden.

Erfindungsgemäß wird die Aufgabe mit den Merkmalen des Anspruches 1 gelöst. Auf diese Weise können zwischen den Leitungsdrähten aufschlagende Niederschläge oder Tau durch die Durchbrechungen hindurchfallen und/oder von der Oberfläche des Kabelbandes abfließen, ohne eine leitende Verbindung zwischen den Leitungsdrähten ausbilden zu können. Das Kabelband wird dabei gleichzeitig leichter und biegsamer, ohne dass dadurch seine Stabilität beeinträchtigt wäre und seine Herstellung erhöhten Aufwand erforderte. Die Anordnung der Leitungsdrähte bleibt unverändert so, dass sie nach Anbringung des Kabelbandes nur nach oben blank liegen, zu dessen nach unten weisenden Seite hin aber in den Kunststoff-Korpus eingebettet bleiben, so dass dort weder leitende elektrische Brücken ausgebildet werden können noch ein elektrischer Kontakt zu dem Auflager für das Kabelband stattfindet, dessen Fläche zumeist aus Metallblechen besteht, die auf den waagerechten Gesimsen, Fensterbänken oder dergleichen, zu deren Schutz angebracht, aufliegen. Die Landefläche wird durch die Durchbrechungen zwar weiträumig aufgelöst, die verbleibenden Restflächen reichen aber zur Anlandung der Vögel vollkommen aus.

Es ist besonders vorteilhaft, wenn die Landefläche im Querschnitt des Kabelbandes konkav gewölbt oder dach förmig ausgebildet ist, wobei sie einen im Querschnitt wulstartigen, durchgehenden First aufweisen kann. Eine solche Form ist einerseits formstabilisierend und andererseits den aufsetzenden Füßen der Vögel so abgepasst, dass diese mit Sicherheit mit jeweils beiden Leitungsdrähten kontaktieren. Darüber hinaus folgt diese Ausformung der zumeist konvexen Ausbildung der Unterseite des Kabelbandes, die dessen Auflage auch auf Freileitungen und dergleichen erlauben soll.

Zum Erhalt der Formstabilität des Kabelbandes kann es nützlich sein, wenn die Längsschlitze eines ersten Stranges in Längsrichtung des Kabelbandes gegen die Längsschlitze eines zweiten Stranges versetzt angeordnet sind, gegebenenfalls in der Weise, dass sie sich in Längsrichtung des Kabelbandes nicht überlappen. Eine solche Ausbildung des Kabelbandes vereint die Vorteile eines relativ biegsamen und gleichzeitig nach seiner Anbringung auch formstabilen Bauteiles mit einer intensiven Auflösung der Flächen zwischen den Leitungsdrähten zugunsten eines sicheren Schutzes vor der Ausbildung stromleitender Brücken.

Die Längsschlitze können so breit gehalten werden, dass in ihrem Bereich entlang der Leitungsdrähte keine oder nur schmale Stege der Landefläche verbleiben; auch auf diese Weise ist gewährleistet, dass die Vögel beim Anflug mit den Füßen voll auf die Leitungsdrähte aufsetzen.

Es ist zweckmäßig, wenn generell zur Befestigung des Kabelbandes an einer zu schützenden Fläche Abstandhalter verwendet werden, die das Kabelband von dieser Fläche distanzieren, auf der die Abstandhalter relativ beliebig befestigt werden können, etwa durch Kleben, Schrauben oder Nageln.

Für die Halterung des Kabelbandes an den Abstandhaltern ist es am besten, wenn diese gegenseitig längsverschiebbar verbunden sind; dazu können die Abstandhalter Gleitnuten aufweisen, in welchen das Kabelband mit seinen als Schienen dienenden, äußeren Längskanten gehaltert ist, die zu diesem Zweck z.B. im Querschnitt wulstartig ausgebildet sein können. Die Abstandhalter können auf diese Weise beliebig verschoben und ihre Lage den örtlichen Verhältnissen optimal angepasst werden.

Das Kabelband ist sehr handlich, wenn die Leitungsdrähte aus einer Drahtlitze bestehen, die, wenn erforderlich, auch mit einem relativ großen Drahtdurchmesser ausgeführt werden kann und dabei trotzdem ausreichend flexibel bleibt; das trifft auch für das gesamte Kabelband zu, wenn sein Kunststoff-Korpus selbst flexibel ist.

Insgesamt bietet das erfindungsgemäße Kabelband nunmehr über die eigentliche Aufgabenstellung hinaus auch ein leicht handhabbares, den jeweiligen örtlichen Bedingungen leicht anzupassendes Bauelement.

Die Erfindung wird nachstehend an Hand der Zeichnung an einem Ausführungsbeispiel näher erläutert. Es zeigen
- Fig. 1: ein Kabelband in der Übersicht,
- Fig. 2: ein Kabelband nach der Erfindung, gegenüber der Darstellung in der Fig. 1 wesentlich vergrößert und in räumlicher Ansicht und
- Fig. 3: einen Abstandhalter für ein Kabelband nach den Fig. 1 und 2 in den Teilfig. a und b in Vorder- und Seitenansicht, etwa im Maßstab der Fig. 2,
jeweils in schematischer, vereinfachter Darstellung.

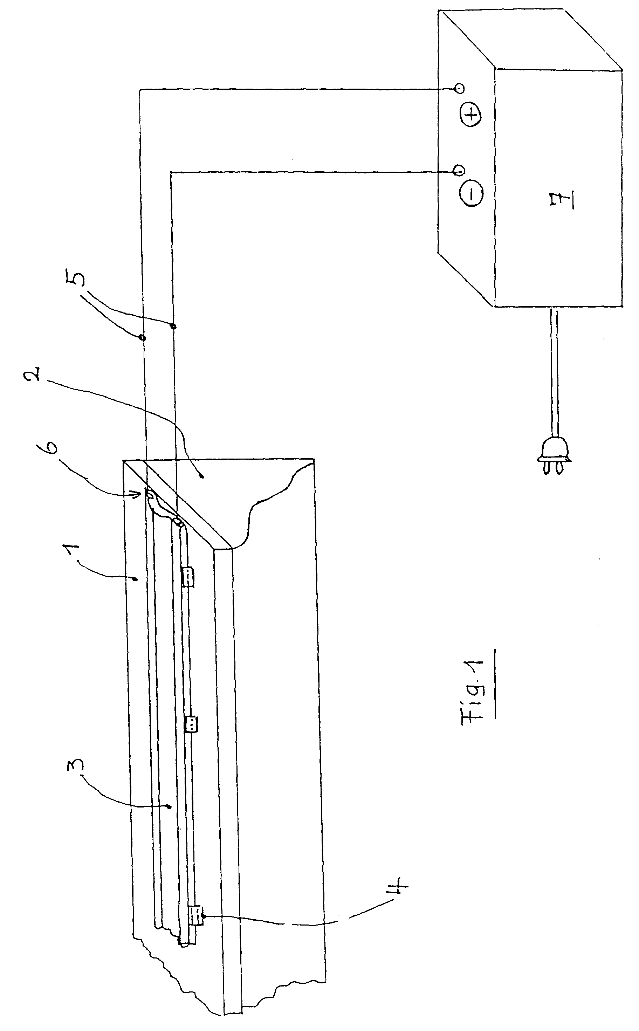

In der Fig. 1 der Zeichnung ist eine zu schützende Fläche 1 eines Gesimses 2 mit einem Kabelband 3 belegt. Das Kabelband 3 ist mittels Abstandhaltern 4 auf der Fläche 1 befestigt. Es sind Zuleitungen 5 zu erkennen, die ein Ende 6 des Kabelbandes 3 mit einer elektrischen Spannungsquelle 7 elektrisch leitend verbinden. Die Spannungsquelle 7 ist wie dargestellt eine Gleichspannungsquelle, die aber direkt an das elektrische Wechselstromnetz anschließbar ist und sich innerhalb des Gebäudes befindet, zu dem das Gesims 2 gehört.

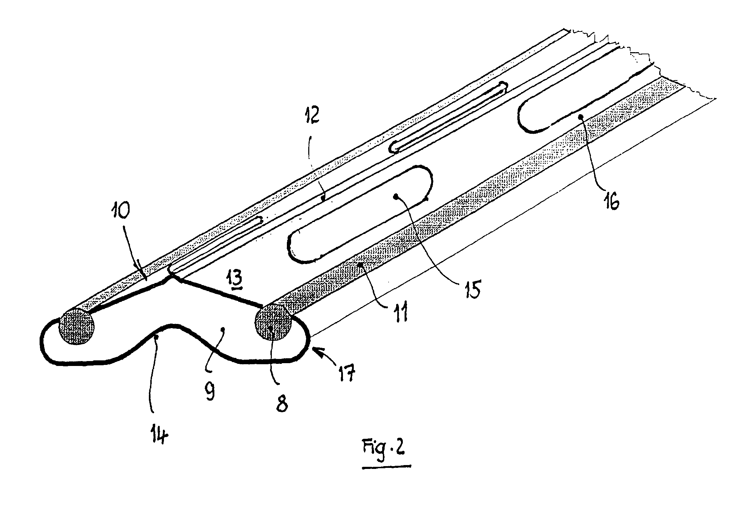

In der Fig. 2 ist zu erkennen, daß das Kabelband 3 aus zwei parallel in einem Kunststoff-Korpus 9 eingebetteten Leitungsdrähten 8 besteht, die jeweils (Fig. 1) an ihrem Ende 6 mit den Zuleitungen 5 verbunden sind. Die Leitungsdrähte 8 sind auf der in der Anordnung der Fig. 1 nach oben gerichteten Landefläche 10 nur teilweise von dem Kunststoff-Korpus 9 umhüllt, so daß sie eine unter elektrischer Spannung stehende, blanke Kontaktfläche 11 haben; landet ein Vogel auf der Landefläche 10, dann bilden seine Füße eine stromleitende Brücke zwischen den Leitungsdrähten 8 aus, so daß die auflandenden Vögel sofort wieder abstreichen. Das Verhältnis von Höhe und Breite des Kabelbandes 3 beträgt etwa 1 zu 4. Eine in einem First 12 gipfelnde Abdachung 13 der Landefläche 10 sorgt zunächst dafür, daß aufschlagendes Regenwasser leicht ablaufen kann und Metallteile, die auf das Kabelband 3 geworfen werden, nicht gleichzeitig mit beiden Leitungsdrähten 8 zusammenkommen und einen Kurzschluß verursachen können. Eine konvexe Einwölbung 14 auf der der Abdachung 13 gegenüberliegenden Seite des Kabelbandes 3 ermöglicht es, diesen auch auf Freileitungen, Haltedrähten von Fahrleitungen oder dergleichen sicher zu befestigen.

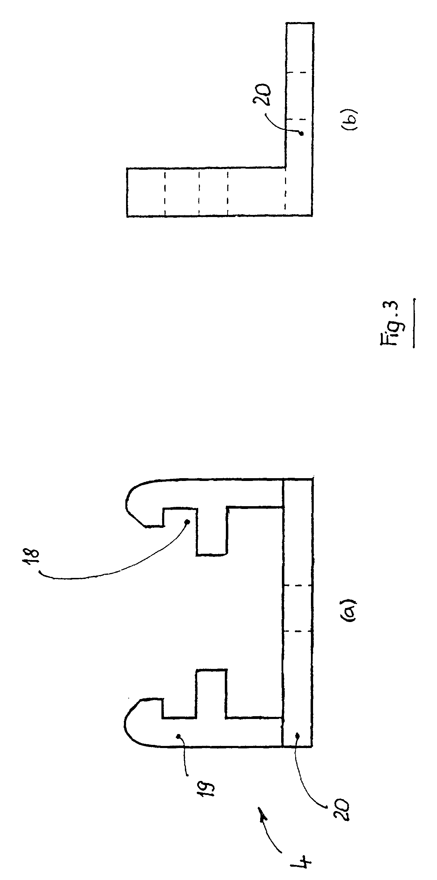

Die Abdachung 13 ist beiderseits mit schlitzförmigen Durchbrechungen 15 versehen, die in die Einwölbung 14 reichen. Sie sind in zwei Strängen angeordnet und in diesen Strängen so gegeneinander versetzt, daß der Querschnitt des Kabelbandes 3 überall etwa das gleiche Widerstandsmoment aufweist. Die an die Leitungsdrähte 8 und den First 12 grenzenden, verbleibenden Stege 16 sind sehr schmal gehalten, so daß Niederschläge weitgehend über die Durchbrechungen 15 abgeleitet werden. Es ist dadurch ohne weiteres möglich, die Längskanten 17 des Kabelbandes 3 wulstartig auszubilden, ohne daß sie das Abfließen des aufschlagenden Regenwasser einschränken, andererseits aber als Lagerung für die Abstandhalter 4 eingerichtet werden können, die (Fig. 3a) jeweils mit einer Gleitnut 18 auf den Längskanten 17 leicht gleitfähig geführt werden. Im übrigen bestehen die Abstandhalter 4 jeweils U-förmig aus zwei die Gleitnuten 18 enthaltenden Seitenwänden 19 und einer die Seitenwände 19 verbindenden Basisfläche 20, die direkt auf der Fläche 1 des Gesimses 2 oder auf einem die Fläche 1 schützenden Metallblech befestigbar ist.

### Aufstellung der verwendeten Bezugszeichen:

- 1: Fläche
- 2: Gesims
- 3: Kabelband
- 4: Abstandhalter
- 5: Zuleitung
- 6: Ende
- 7: Spannungsquelle
- 8: Leitungsdraht
- 9: Kunststoff-Korpus
- 10: Landefläche
- 11: Kontaktfläche
- 12: First
- 13: Abdachung
- 14: Einwölbung
- 15: Durchbrechung
- 16: Steg
- 17: Längskante
- 18: Gleitnut
- 19: Seitenwand
- 20: Basisfläche

## Patentansprüche

1. Vorrichtung zum Vertreiben von Vögeln, insbesondere von Tauben, zum Schutz von Gebäuden oder Gebäudeteilen wie Mauer- oder Fenstersimsen, von Fahr- und Freileitungsdrähten oder ähnlichen, für Vögel geeigneten und zumindest zeitweilig als Aufenthalt dienenden, potentielle Landeplätze bildenden Flächen, mit einem bandartigen, flachen, vorzugsweise flexiblen Kabelband (3) aus Isolierstoff, welches in einem Kunststoff-Korpus (9) an einer im Wesentlichen nach oben weisenden und für die Landung von Vögeln geeigneten potentiellen Landefläche (10) zwei parallel und mit Abstand voneinander verlaufende, gegeneinander isolierte und zumindest teilweise blanke, unter Spannung setzbare elektrische Leitungsdrähte (8) aufweist, wobei deren Abstand so gewählt ist, dass die Füße auflandender Vögel eine stromleitende Brücke zwischen den Leitungsdrähten (8) ausbilden, der Kunststoff-Korpus (9) zwischen den Leitungsdrähten (8) Durchbrechungen (15) aufweist, deren Flächennormalen quer zu dem Kabelband (3) gerichtet sind und deren geometrische Form und/oder Anordnung so ausgebildet sind, dass sie einen raschen, rückstandslosen oder -armen Durchsatz der auf die Landefläche (10) aufschlagenden Niederschläge durch das Kabelband (3) gewährleisten,
**dadurch gekennzeichnet, dass**
die Landefläche (10) im Querschnitt des Kabelbandes (3) dachförmig ausgebildet ist und einen wulstartigen, durchgehenden First (12) aufweist.

2. Vorrichtung nach Anspruch 1, **dadurch gekennzeichnet, dass** die Durchbrechungen (15) als zu den Leitungsdrähten (8) parallele Längsschlitze ausgebildet sind.

3. Vorrichtung nach Anspruch 2, **dadurch gekennzeichnet, dass** mindestens zwei zueinander parallel verlaufende Stränge von Längsschlitzen vorgesehen sind.

4. Vorrichtung nach Anspruch 3, **dadurch gekennzeichnet, dass** die Längsschlitze eines ersten Stranges in Längsrichtung des Kabelbandes (3) gegen die Längsschlitze eines zweiten Stranges versetzt angeordnet sind.

5. Vorrichtung nach Anspruch 4, **dadurch gekennzeichnet, dass** sich die Längsschlitze beider Stränge in Längsrichtung des Kabelbandes (3) nicht überlappen.

6. Vorrichtung nach einem der Ansprüche 2 bis 5, **dadurch gekennzeichnet, dass** die Breite der Längsschlitze so gewählt ist, dass im Bereich der Längsschlitze entlang der Leitungsdrähte (8) keine oder nur schmale Stege (16) der Landefläche (10) verbleiben.

7. Vorrichtung nach einem der Ansprüche 1 bis 6, **dadurch gekennzeichnet, dass** Abstandhalter (4) vorgesehen sind, mit denen das Kabelband (3) an einer zu schützenden Fläche (1) mit Abstand befestigbar ist.

8. Vorrichtung nach Anspruch 7, **dadurch gekennzeichnet, dass** die Abstandhalter (4) mit dem Kabelband (3) gegenseitig längsverschiebbar verbunden sind.

9. Vorrichtung nach Anspruch 8, **dadurch gekennzeichnet, dass** die Abstandhalter (4) Gleitnuten (18) aufweisen, in welchen das Kabelband (3) mit seinen als Schienen dienenden, äußeren Längskanten (17) gehaltert ist.

10. Vorrichtung nach Anspruch 9, **dadurch gekennzeichnet, dass** die Längskanten (17) im Querschnitt wulstartig ausgebildet sind.

11. Vorrichtung nach einem der Ansprüche 1 bis 10, **dadurch gekennzeichnet, dass** die Leitungsdrähte (8) aus einer Drahtlitze bestehen.

12. Vorrichtung nach einem der Ansprüche 1 bis 11, **dadurch gekennzeichnet, dass** der Kunststoff-Korpus (9) flexibel ist.

## Claims

1. A device for scaring birds, in particular pigeons, for the purpose of protecting buildings or building parts such as wall mouldings and window sills, contact wires and overhead wires, or similar surfaces forming potential landing sites suitable for birds and serving at least temporarily as a stopping place, with a ribbon-like, flat, preferably flexible cable strip (3) made of an insulating material, which has, in a plastics-material corpus (9) on a potential landing surface (10) which faces substantially upwards and is suitable for birds to land, two electrical conductors (8) to which a voltage may be applied and which follow a course parallel to and at a distance from one another, being insulated from one another and at least partially bare, the distance therebetween being selected in such a way that the feet of birds landing thereon form a current-conducting bridge between the conductors (8), the plastics-material corpus (9) has openings (15) between the conductors (8), the surface normals of which are directed crosswise to the cable strip (3) and the geometric shape and/or arrangement of which are designed in such a way as to ensure that the precipitation striking the landing surface (10) flows rapidly through the cable strip (3) leaving little or no residue, **characterised in that** in the cross-section of the cable strip (3) the landing surface (10) is shaped like a roof and has a bead-like continuous ridge (12).

2. A device according to Claim 1, **characterised in that** the openings (15) are in the form of longitudinal slits parallel to the conductors (8).

3. A device according to Claim 2, **characterised in that** at least two rows of mutually parallel longitudinal slits are provided.

4. A device according to Claim 3, **characterised in that** the longitudinal slits of a first row in the longitudinal direction of the cable strip (3) are in an off-set arrangement relative to the longitudinal slits of a second row.

5. A device according to Claim 4, **characterised in that** the longitudinal slits of the two rows do not overlap in the longitudinal direction of the cable strip (3).

6. A device according to one of Claims 2 to 5, **characterised in that** the width of the longitudinal slits is selected in such a way that no landing surface (10) or only narrow pieces (16) thereof remain in the region of the longitudinal slits along the conductors (8).

7. A device according to one of Claims 1 to 6, **characterised in that** spacers (4) are provided with which the cable strip (3) is fixable to a surface to be protected and at a distance therefrom.

8. A device according to Claim 7, **characterised in that** the spacers (4) are connected to the cable strip (3) so as to be mutually displaceable longitudinally.

9. A device according to Claim 8, **characterised in that** the spacers (4) have sliding grooves (18) in which the cable strip (3) is mounted with its outer long edges serving as rails.

10. A device according to Claim 9, **characterised in that**, in cross-section, the long edges (17) are in the form of beads.

11. A device according to one of Claims 1 to 10, **characterised in that** the conductors (8) consist of a wire strand.

12. A device according to one of Claims 1 to 11, **characterised in that** the plastics-material corpus (9) is flexible.

## Revendications

1. Dispositif pour expulser les oiseaux, en particulier les pigeons, pour la protection de bâtiments ou de parties de bâtiments comme les rebords de murs ou de fenêtres, de fils de caténaires et de fils électriques aériens ou de surfaces similaires formant des emplacements potentiels d'atterrissage, convenant aux oiseaux et servant au moins temporairement de lieu de séjour, comportant une fixation de câble (3) en bande, plate, de préférence flexible, en matière isolante, laquelle présente dans un corps en matière plastique (9), sur une surface d'atterrissage (10) potentielle dirigée sensiblement vers le haut et convenant à l'atterrissage d'oiseaux, deux fils (8) conducteurs s'étendant parallèlement et à distance l'un de l'autre, isolés l'un par rapport à l'autre et tout au moins partiellement nus, pouvant être mis sous tension, leur distance étant choisie de manière à ce que les pieds d'oiseaux atterrissant forment un pont conducteur de courant entre les fils (8) conducteurs, le corps en matière plastique (9) présentant entre les fils (8) conducteurs des perçages (15) dont les normales à la surface sont dirigées transversalement par rapport à la fixation de câble (3) et dont la forme géométrique et/ou la disposition sont conçues de manière à ce qu'ils garantissent par le biais de la fixation de câble (3) un débit rapide sans résidus ou pauvre en résidus, des précipitations tombant sur la surface d'atterrissage (10),
**caractérisé en ce que**
la surface d'atterrissage (10) est conçue, dans la section transversale de la fixation de câble (3), en forme de toit, et présente un faîte (12) de bout en bout en bourrelet.

2. Dispositif selon la revendication 1, **caractérisé en ce que** les perçages (15) sont conçus en tant que fentes longitudinales parallèles aux fils (8) conducteurs.

3. Dispositif selon la revendication 2, **caractérisé en ce qu'**au moins deux rangées de fentes longitudinales s'étendant parallèlement l'une à l'autre sont prévues.

4. Dispositif selon la revendication 3, **caractérisé en ce que** les fentes longitudinales d'une premier rangée sont disposées dans le sens longitudinal de la fixation de câble (3) de manière décalée par rapport aux fentes longitudinales d'une deuxième rangée.

5. Dispositif selon la revendication 4, **caractérisé en ce que** les fentes longitudinales des deux rangées ne se chevauchent pas dans le sens longitudinal de la fixation de câble (3).

6. Dispositif selon l'une des revendications 2 à 5, **caractérisé en ce que** la largeur des fentes longitudinales est choisie de manière à ce que, dans la zone des fentes longitudinales le long des fils (8) conducteurs, il ne reste pas de bande ou que des bandes étroites (16) de la surface d'atterrissage (10).

7. Dispositif selon l'une des revendications 1 à 6, **caractérisé en ce que** sont prévues des pièces d'écartement (4) par lesquelles la fixation de câble (3) peut être fixée avec écartement sur une surface (1) à protéger.

8. Dispositif selon la revendication 7, **caractérisé en ce que** les pièces d'écartement (4) sont reliées avec la fixation de câble (3), de manière à pouvoir être décalées longitudinalement l'une par rapport à l'autre.

9. Dispositif selon la revendication 8, **caractérisé en ce que** les pièces d'écartement (4) présentent des rainures de glissement (18), dans lesquelles la fixation de câble (3) est maintenue par ses bords longitudinaux extérieurs (17) servant de rails.

10. Dispositif selon la revendication 9, **caractérisé en ce que** dans la section transversale les bords longitudinaux (17) sont en bourrelet.

11. Dispositif selon l'une des revendications 1 à 10, **caractérisé en ce que** les fils (8) conducteurs sont constitués d'un fil électrique souple.

12. Dispositif selon l'une des revendications 1 à 11, **caractérisé en ce que** le corps en matière plastique (9) est flexible.
